# EUROPÄISCHE PATENTSCHRIFT

(11) **EP 1 409 335 B1**
(45) Veröffentlichungstag und Bekanntmachung des Hinweises auf die Patenterteilung: **30.03.2005**
(21) Anmeldenummer: 02790180.0
(22) Anmeldetag: 18.07.2002
(51) Int. Cl.: B63B 39/00, B63H 1/28

(54) **VERRINGERUNG VON PROPELLERERREGTEN DRUCKSCHWANKUNGEN MIT EINLEITBARER LUFT**
REDUCTION OF PROPELLER-INDUCED PRESSURE FLUCTUATIONS BY INTRODUCTION OF AIR
REDUCTION DE FLUCTUATIONS DE PRESSION INDUITES PAR UNE HELICE PAR INTRODUCTION D'AIR

(30) Priorität: 20.07.2001 DE 10135474
(43) Veröffentlichungstag der Anmeldung: 21.04.2004
(73) Patentinhaber: KVAERNER WARNOW WERFT GmbH, 18119 Rostock (DE)
(72) Erfinder: KÜHMSTEDT, Thomas, 18055 Rostock (DE); MILBRADT, Gerd, 18055 Rostock (DE)
(74) Vertreter: Geyer, Ulrich F., Dr. Dipl.-Phys.
(86) Internationale Anmeldenummer: PCT/EP2002/008029
(87) Internationale Veröffentlichungsnummer: WO 2003/010045

(56) Entgegenhaltungen:
- DE-A- 2 401 831
- DE-A- 10 016 990
- GB-A- 2 155 880
- JP-A- 59 216 789
- US-A- 4 804 312
- US-A- 4 973 275

## Beschreibung

Die Erfindung betrifft ein Schiff mit wenigstens einem Propeller, wobei in wenigstens einem Außenbereich des Schiffs, in dem propellererregte Druckschwankungen auftreten, Luft einleitbar ist.

In der Umgebung eines Propellers treten aufgrund der Wirkung des arbeitenden Propellers Druckschwankungen auf, die zu starken mechanischen Belastungen dieser Schiffsbereiche und auch des gesamten Schiffs führen. Abgesehen davon, daß dadurch die Lebensdauer des Schiffs verringert wird, ist es bei herkömmlichen Schiffen aufgrund der durch die Propeller induzierten Druckschwankungen auch erforderlich, den Abstand zwischen Propeller und Schiffsaußenhaüt relativ groß zu gestalten, was wiederum zu Beeinträchtigungen des Wirkungsgrads von Antriebsanlagen bei Schiffen führt.

Aus der JP 592 167 89 A ist ein Schiff bekannt, bei dem Luft oder ein Teil der Abluft des Schiffsmotors über ein Gebläse und eine Düse oberhalb des Propellers ausgeblasen wird, um einen Strahl-Blasenbereich oberhalb oder nahe des oberen Bereichs des Propellers auszubilden. Dieser Strahl-Blasenbereich verringert den propellererregten Druck auf den Schiffsrumpf im Propellerbereich. Für die Ausbildung des Strahl-Blasenbereichs sind große Gas- bzw. Luftmengen und damit große Aggregate erforderlich, um diesen Blasenbereich aufrecht erhalten zu können, weil der Strahl und die Blasen bei Fahrtaufnahme des Schiffs schnell nach Achtern auswandern und ständig mit einem hohen Gasoder Luftvolumen ersetzt werden müssen.

Aus der DE-OS 2 401 831, der GB 2 155 880 A, der US 4 804 312 A, der DE 100 16 990 A oder der US 4 973 275 A ist jeweils ein Schiff bekannt, bei dem - ebenso wie bei der Vorrichtung gemäß der JP 592 16 789 - ein Gas- oder Luftstrom im Propellerbereich ausgeblasen wird, um Propellergeräusche und Vibrationen im Schiff zu reduzieren. Verschiedenste Maßnahmen werden vorgeschlagen, das ausgeblasene Gasvolumen, beispielsweise in Ab hängigkeit des Rumpfneigungswinkels, der Propellerwellen-Ausgangsleistung, der Flügelanzahl des Propellers oder der Luftverteilung über Höhenbereiche hinweg unterschiedlich zu dimensionieren.

Aus der DE 19 07 634 A1 ist eine Isolierung zur Verminderung der Schallübertragung zwischen der Aussenhaut von Schiffen und dem Wasser bekannt, um eine Schallübertragung zwischen einem Schiffskörper und dem umgebenden Wasser zu vermindern, damit Schiffe, insbesondere Kriegsschiffe, schwerer geortet werden können und vor Minen besser geschützt sind. Die Schallübertragung zwischen Schiff und Wasser soll durch die Verwendung einer Isolierschicht verringert werden, die auf die dem Wasser zugewandte Seite der Aussenhaut über deren gesamte Fläche hinweg angebracht wird.

Aus der JP 60 18 32 93A ist eine Flossenstruktur für Schiffe bekannt, die Löcher oder Poren aufweist, die durch die Flossen hindurchgehen, mit dem Ziel, dass an den Einlässen und Auslässen der Durchlässe winzige Wirbel entstehen, die den Dämpfungskoeffizienten der Flosse aufgrund der Fluidviskosität innerhalb den Durchgängen vergrößert.

Der Erfindung liegt die Aufgabe zugrunde, ein Schiff mit wenigstens einem Propeller zu schaffen, bei dem die durch arbeitende Propeller induzierte Druckschwankungen an der Außenhaut des Schiffs gering mit geringem konstruktiven und Wartungsaufwand sowie kostengünstig gehalten werden.

Ausgehend von dem eingangs genannten Schiff wird die gestellte Aufgabe erfindungsgemäß dadurch gelöst, daß eine Struktur mit wenigstens einer Vertiefung zur Bildung eines Luftpolsters, beispielsweise in Form einer Luftschicht, vorgesehen ist. Aufgrund des Luftpolsters, das beispielsweise durch Ausblasen von Luft geschaffen wird, werden die Druckschwankungen, die durch die Propeller auf die dem Propeller benachbarten Schiffsbereiche auftreten, wesentlich verringert. Dadurch sind diese Schiffsbereiche wesentlich weniger mechanisch belastet und insbesondere ist es dadurch möglich, den Abstand zwischen Propeller und Schiffsaußenhaut, also den Propellerfreischlag, zu verringern und damit bei gegebener Schiffs- oder Hinterschiffskontur größere Propellerdurchmesser einzusetzen, wodurch der Wirkungsgrad der Antriebsanlage gegenüber herkömmlichen Schiffen ohne Luftpolster signifikant erhöht wird.

Die Struktur hindert das Luftpolster bzw. die für die Schaffung des Luftpolsters ausgeblasene Luft daran, aus diesem kritischen Schiffsbereich zu entweichen, so daß auf diese Weise der Luftbedarf zur Aufrechterhaltung des Luftpolsters klein gehalten wird, mit der Folge, daß die Kosten zur Bildung des Luftpolsters gering sind.

Die Ausbildung der Struktur mit Vertiefungen zur Bildung eines Luftpolsters ist bei einem mit einer Außenhaut versehenen Schiffskörper besonders vorteilhaft, wenn die Struktur mit der wenigstens einen Vertiefung im Schiffskörper selbst vorgesehen ist, wobei die Vertiefungen durch die Außenhaut hindurch nach außen offen sind.

Gemäß einer alternativen Ausführungsform der Erfindung oder zusätzlich zu ihr ist die Struktur mit den Vertiefungen auf oder in der Außenhaut selbst vorgesehen. Die Struktur mit Vertiefungen kann dabei auf der Außenhaut aufgebracht, oder Teil der Außenhaut sein.

Sowohl für die Ausführungsform, bei der die Vertiefungen im Schiffskörper vorgesehen sind, als auch bei Ausführungsformen mit Strukturen auf der Außenhaut ist es besonders vorteilhaft, wenn die Strukturen wabenförmige Vertiefungen aufweisen. Dadurch ergibt sich eine Vielzahl von Vertiefungen, in denen die Luft gut gehalten werden kann, so daß ein geringerer Luftnachströmbedarf besteht.

Obwohl es auch vorteilhaft sein kann, nur eine Vertiefung, d.h. also auch nur eine Kammer für die Luft bzw. das Luftpolster vorzusehen, sind gemäß einer Ausführungsform viele Räume oder Kammern vorgesehen. Hierfür ist ein poriges, insbesondere ein feinporiges Material aus Kunststoff von besonderem Vorteil, da es für die Vertiefungen keines konstruktiven Aufwands bedarf und ein derartiges Kunststoffmaterial kostengünstig und leicht austauschbar ist.

Das Luftpolster wird vorzugsweise durch aus dem Schiff austretende Luft gebildet bzw. aufrechterhalten, wobei die in Strömungsrichtung des Wasser abgehende Luft nachgeliefert wird.

Die Luft wird in die Vertiefungen oder Struktur durch Luftaustrittsöffnungen in diesen Vertiefungen eingeleitet, wobei im Falle der Ausführungsform mit Vertiefungen im Schiffskörper selbst die Austrittsöffnungen in diesen Vertiefungen des Schiffskörpers enden und bei Ausführungsformen mit Strukturen auf der Außenhaut die Austrittsöffnungen durch die Außenhaut hindurch treten.

Gemäß einer besonders vorteilhaften Ausführungsform der Erfindung sind die Luftaustrittsöffnungen in Fahrrichtung des Schiffes vor der Struktur bzw. der Vertiefungen vorgesehen. Das Auf- und Nachfüllen der Strukturen oder Vertiefungen mit Luft erfolgt in diesem Falle durch die in Strömungsrichtung mitgenommene Luft.

Gemäß weiteren Ausführungsformen ist es vorteilhaft, den Füllstand der Luft in den Vertiefungen zu steuern und je nach den Erfordernissen und Gegebenheiten, beispielsweise in Abhängigkeit von der Relativgeschwindigkeit zwischen Schiff und Wasser oder von der Propellerdrehzahl, zu verändern bzw. nachzufüllen. In bestimmten Anwendungsfällen ist es auch vorteilhaft, einen Überschuß an Luft in die Vertiefungen oder vor den Vertiefungen aus dem Schiffskörper auszuleiten, wobei der Luftüberschuß in Strömungsrichtung mitgenommen wird und sich in Bereichen in Strömungsrichtung hinter den Vertiefungen Luftpolster bilden.

Die Anwendung der Erfindung ist nicht nur im Zusammenhang mit Propulationssystemen an Hinterschiffen, sondern auch im Zusammenhang mit Propellern in anderen Schiffsbereichen anwendbar. Im Falle, daß der Propeller wenigstens teilweise in einer Ummantelung angeordnet ist, d.h. bei der Verwendung von Propellerdüsen, ist die Ummantelung propellerseitig mit einer der zuvor beschriebenen Strukturen mit wenigstens einer Vertiefung zur Bildung des Luftpolsters ausgestattet.

Die Erfindung wird nachfolgend anhand eines Ausführungsbeispiels unter Bezug auf die Figuren erläutert. Es zeigen:
- Fig. 1: ein Hinterschiff mit Propeller in teilweiser Querschnitts-Darstellung und
- Fig. 2: das Hinterschiff in Blickrichtung von unten.

Ein am Hinterschiff 1 angeordneter Propeller 2 wird von einer Propellerwelle 3 angetrieben. In Fahrrichtung hinter dem Propeller 2 befindet sich ein Ruder 4 mit einem Ruderträger 5 und einem beweglichen Ruder 6.

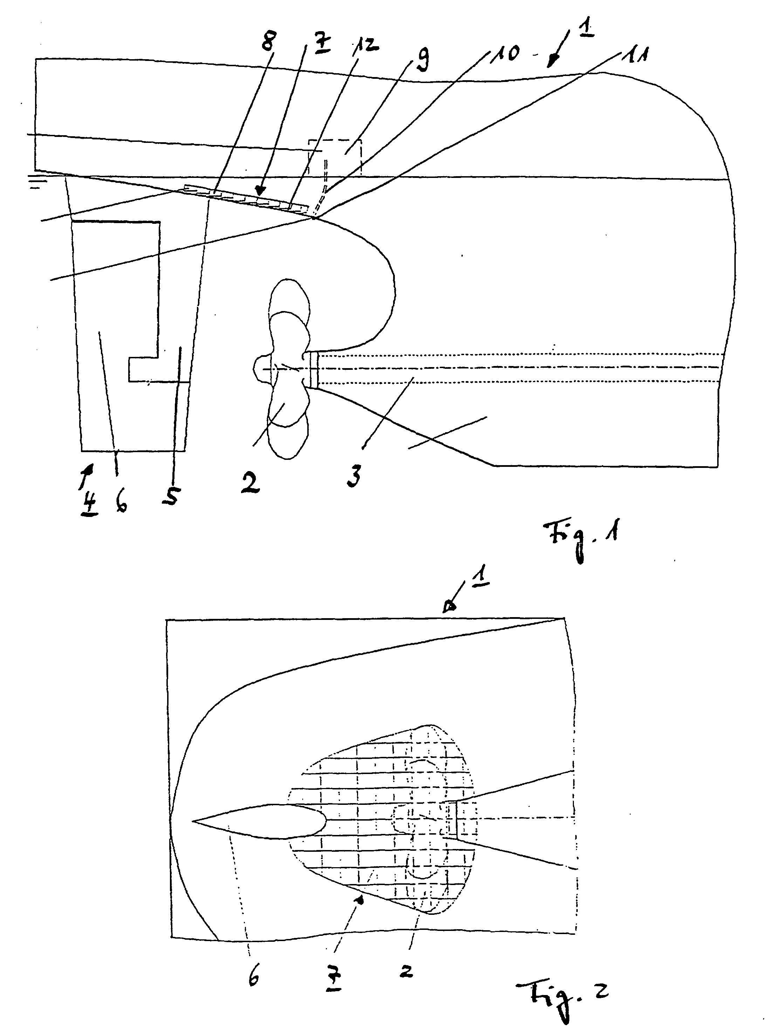

Über dem und achterlich vom Propeller 2 befindet sich am Hinterschiff 1 eine Struktur 7 mit Vertiefungen 8, die bei dem dargestellten Ausführungsbeispiel wabenförmig angeordnet bzw. ausgebildet sind, wie dies insbesondere aus Fig. 2 ersichtlich ist.

Bei dem dargestellten Ausführungsbeispiel der Erfindung ist im Schiffsinneren ein Kompressor 9 schematisch dargestellt, der über eine Druckluftleitung 10 mit einer Luft-Ausströmöffnung 11 verbunden ist, über die Luft aus dem Schiffskörper bzw. durch die Außenhaut nach außen ausströmt. Aufgrund der Wasserströmung in Richtung nach hinten gelangt die Luft in die Vertiefungen 8 der wabenartigen Struktur 7 und bildet dort ein Luftpolster 12. Die Vertiefungen 8, bzw. die wabenförmigen Begrenzungen der Vertiefungen 8 der Struktur 7 halten die Luft in diesem Bereich, so daß der Druckluftbedarf und damit die Kosten hierfür klein gehalten werden. Der dennoch nach hinten abströmende Teil des Luftpolsters 12 wird durch die kontinuierlich oder zeitweilig aus den Luft-Ausströmöffnungen 11 ausströmenden Druckluft ersetzt.

Die Erfindung wurde zuvor anhand eines bevorzugten Ausführungsbeispiels erläutert. Dem Fachmann sind jedoch Abwandlungen, Modifikationen und Ausgestaltungen möglich, ohne daß dadurch die beanspruchte Erfindung verlassen wird. Beispielsweise kann die Struktur 7 mit den Vertiefungen 8 nicht nur im Schiffskörper selbst, sondern auch in der Außenhaut ausbildet sein. Darüber hinaus ist es möglich, alternativ oder zusätzlich zu den Luftaustrittsöffnungen 8 in Strömungsrichtung vor der Struktur 7 auch Luftaustrittsöffnungen in der Struktur selber bzw. in allen oder einzelnen Vertiefungen 8 der Struktur 7 vorzusehen. Die Struktur 7 kann vorzugsweise so ausgebildet werden, daß für den jeweiligen Anwendungsfall ein möglichst kontinuierliches und gleichmäßiges Luftpolster gebildet wird. Auch ist es möglich, die Luftmenge an verschiedenen Stellen des Luftpolsters unterschiedlich zu wählen, beispielsweise könnte direkt oberhalb des Propellers 2 die Luftschicht dicker gewählt werden als in Bereichen, die achterlicher liegen. Für ein optimales Luftpolster sowohl räumlich gesehen als auch im Verhältnis zu den gegebenen Parametern, wie Schiffsgeschwindigkeit, Propellerdrehzahl usw. ist es erfindungsgemäß auch möglich, die Luftzufuhr zu steuern und zu regeln, um optimale Dämpfungsbedingungen einerseits und möglichst einen geringen Druckluftbedarf andererseits zu erreichen.

## Patentansprüche

1. Schiff mit wenigstens einem Propeller (2), wobei in wenigstens einem Außenbereich des Schiffs, in dem propellererregte Druckschwankungen auftreten, Luft einleitbar ist, **gekennzeichnet durch** eine Struktur mit wenigstens einer Vertiefung zur Bildung eines Luftpolsters (12).

2. Schiff nach Anspruch 1, **dadurch gekennzeichnet, daß** das Schiff einen mit einer Außenhaut versehenen Schiffskörper aufweist, in dem die Struktur (7) mit wenigstens einer Vertiefung (8) vorgesehen ist, die durch die Außenhaut hindurch nach außen offen ist.

3. Schiff nach einem der vorhergehenden Ansprüche, **dadurch gekennzeichnet, daß** die Struktur (7) mit Vertiefungen (8) auf der Außenhaut vorgesehen ist.

4. Schiff nach einem der vorhergehenden Ansprüche, **dadurch gekennzeichnet, daß** die Struktur (7) wabenförmige Vertiefungen (8) aufweist.

5. Schiff nach einem der Ansprüche 1 bis 4, **dadurch gekennzeichnet, daß** die Struktur (7) aus einem porigen Material gebildet ist.

6. Schiff nach einem der vorhergehenden Ansprüche, **dadurch gekennzeichnet, daß** die Struktur (7) aus einem Vertiefungen (8) aufweisenden Kunststoff besteht.

7. Schiff nach einem der vorhergehenden Ansprüche, **dadurch gekennzeichnet, daß** das Luftpolster (12) durch aus dem Schiff austretende Luft gebildet ist.

8. Schiff nach einem der vorhergehenden Ansprüche, **dadurch gekennzeichnet, daß** Luftaustrittsöffnungen in den Vertiefungen vorgesehen sind.

9. Schiff nach einem der vorhergehenden Ansprüche, **dadurch gekennzeichnet, daß** Luftaustrittsöffnungen (11) in Fahrrichtung vor der Struktur (7) vorgesehen sind.

10. Schiff nach einem der vorhergehenden Ansprüche, **dadurch gekennzeichnet, daß** der Füllstand der Luft in den Vertiefungen (8) veränderbar ist.

11. Schiff nach einem der vorhergehenden Ansprüche, **dadurch gekennzeichnet, daß** die Luft in den Vertiefungen (8) nachfüllbar ist.

12. Schiff nach einem der vorhergehenden Ansprüche, **dadurch gekennzeichnet, daß** ein Überschuß an Luft in den Vertiefungen (8) vorgesehen ist.

13. Schiff nach einem der vorhergehenden Ansprüche, **dadurch gekennzeichnet, daß** der Propeller (2) in einer Ummantelung angeordnet ist, und daß die Ummantelung propellerseitig eine Struktur (7) mit wenigstens einer Vertiefung (8) zur Bildung des Luftpolsters (12) aufweist.

## Claims

1. A ship having at least one propeller (2) wherein air is adapted to be introduced into at least one external area of the ship in which propeller-induced pressure fluctuations occur, **characterised by** a structure incorporating at least one recess for forming an air cushion (12).

2. A ship in accordance with Claim 1, **characterised in that** the ship comprises a hull provided with an outer skin in which the structure (7) incorporating at least one recess (8) is located which is open outwardly through the outer skin.

3. A ship in accordance with any of the preceding Claims, **characterised in that** the structure (7) is provided with recesses (8) on the outer skin.

4. A ship in accordance with any of the preceding Claims, **characterised in that** the structure (7) comprises honeycombed recesses (8).

5. A ship in accordance with any of the Claims 1 to 4, **characterised in that** the structure (7) is formed from a porous material.

6. A ship in accordance with any of the preceding Claims, **characterised in that** the structure (7) consists of a synthetic material comprising recesses (8).

7. A ship in accordance with any of the preceding Claims, **characterised in that** air cushion (12) is formed by air emerging from the ship.

8. A ship in accordance with any of the preceding Claims, **characterised in that** air outlet openings are provided in the recesses.

9. A ship in accordance with any of the preceding Claims, **characterised in that** air outlet openings (11) are provided in front of the structure (7) in the direction of travel.

10. A ship in accordance with any of the preceding Claims, **characterised in that** the quantity of air in the recesses (8) is variable.

11. A ship in accordance with any of the preceding Claims, **characterised in that** air is refillable into the recesses (8).

12. A ship in accordance with any of the preceding Claims, **characterised in that** a surplus of air is provided in the recesses (8).

13. A ship in accordance with any of the preceding Claims, **characterised in that** the propeller (2) is arranged in a shroud, and **in that**, on the propeller side thereof, the shroud comprises a structure (7) incorporating at least one recess (8) for forming the air cushion (12).

## Revendications

1. Bateau comportant une hélice (2), sachant que de l'air peut être introduit dans au moins une zone extérieure du bateau dans laquelle sont générées des fluctuations de pression induites par l'hélice, **caractérisé par** une structure comportant au moins un creux pour la formation d'un matelas d'air (12).

2. Bateau selon la revendication 1, **caractérisé en ce que** le bateau comporte un corps de bateau muni d'une paroi extérieure, dans lequel est prévue la structure (7) comportant au moins un creux (8), qui est ouvert vers l'extrémité à travers la paroi extérieure.

3. Bateau selon l'une quelconque des revendications précédentes, **caractérisé en ce que** la structure (7) est prévue avec des creux (8) sur la paroi extérieure.

4. Bateau selon l'une quelconque des revendications précédentes, **caractérisé en ce que** la structure (7) comporte des creux (8) en forme d'alvéoles.

5. Bateau selon l'une quelconque des revendications 1 à 4, **caractérisé en ce que** la structure (7) est réalisée dans un matériau poreux.

6. Bateau selon l'une quelconque des revendications précédentes, **caractérisé en ce que** la structure (7) est réalisée dans une matière plastique comportant des creux (8).

7. Bateau selon l'une quelconque des revendications précédentes, **caractérisé en ce que** le matelas d'air (12) est formé par l'air sortant du bateau.

8. Bateau selon l'une quelconque des revendications précédentes, **caractérisé en ce que** des orifices de sortie d'air sont prévus dans les creux.

9. Bateau selon l'une quelconque des revendications précédentes, **caractérisé en ce que** les orifices de sortie d'air (11) sont prévus en amont de la structure (7) par référence au sens de déplacement.

10. Bateau selon l'une quelconque des revendications précédentes, **caractérisé en ce que** le niveau de remplissage d'air dans les creux (8) est réglable.

11. Bateau selon l'une quelconque des revendications précédentes, **caractérisé en ce qu'**il est possible de rajouter de l'air dans les creux (8).

12. Bateau selon l'une quelconque des revendications précédentes, **caractérisé en ce qu'**un excédent d'air est prévu dans les creux (8).

13. Bateau selon l'une quelconque des revendications précédentes, **caractérisé en ce que** l'hélice (2) est agencée dans une enveloppe et **en ce que** l'enveloppe comporte du côté de l'hélice une structure (7) avec au moins un creux (8) pour la formation du matelas d'air (12).
